Europäisches Patentamt

European Patent Office

Office européen des brevets

(11) Veröffentlichungsnummer: **0 124 737**
**B1**

(12) **EUROPÄISCHE PATENTSCHRIFT**

(45) Veröffentlichungstag der Patentschrift:
**18.10.89**

(51) Int. Cl.⁴: **C 01 B 33/28**, B 01 J 20/18

(21) Anmeldenummer: **84103206.3**

(22) Anmeldetag: **23.03.84**

(54) **Magnesiumsilikatgebundene Zeolithgranulate vom Typ Zeolith A, Verfahren zu ihrer Herstellung und Verwendung.**

(30) Priorität: **11.04.83 DE 3312877**

(43) Veröffentlichungstag der Anmeldung:
**14.11.84 Patentblatt 84/46**

(45) Bekanntmachung des Hinweises auf die Patenterteilung:
**18.10.89 Patentblatt 89/42**

(84) Benannte Vertragsstaaten:
**AT BE CH DE FR GB LI LU NL**

(56) Entgegenhaltungen:
**DE-A- 2 656 633**
**DE-B- 1 792 743**
**DE-C- 1 567 588**

(73) Patentinhaber: **Degussa Aktiengesellschaft,**
**Weissfrauenstrasse 9, D-6000 Frankfurt am Main 1 (DE)**

(72) Erfinder: **Strack, Hans, Dr., Riemenschneiderstrasse 1,**
**D-8755 Alzenau (DE)**
Erfinder: **Kleinschmit, Peter, Dr., Wildaustrasse 19,**
**D-6450 Hanau 9 (DE)**

## Beschreibung

Die Erfindung betrifft neue magnesiumsilikatgebundene Zeolithgranulate vom Typ Zeolith A, Verfahren zu ihrer Herstellung sowie deren Verwendung als Adsorptionsmittel.

Es ist bekannt, magnesiumsilikatgebundene Zeolithgranulate mit Hilfe von Natriumsilikatlösung herzustellen, indem man kristallinen Zeolith NaA mit einem Alkalisilikat, in dem das Verhältnis $Me_2O : SiO_2$ 1 : 3 bis 1 : 5 beträgt, verformt und das verformte Produkt anschließend bei Temperaturen zwischen 40 und 280 °C bis zu einer Restfeuchtigkeit von 0 bis 35 Gewichtsprozent trocknet, anschließend mit einer 0,5 bis 35 %igen Magnesiumsalzlösung bis zum völligen Ionenaustausch im Zeolith und Umwandlung des Alkalisilikats in Magnesiumsilikat behandelt, die Formkörper durch Waschen mit Wasser von anhaftender Salzlösung befreit und schließlich bei Temperaturen über 200 °C aktiviert.

Die derart hergestellten magnesiumsilikatgebunden Zeolithgranulate zeichnen sich dadurch aus, daß die in der Ausgangsmischung enthaltenen Alkalimetalle vollständig in den Zeolithgranulaten durch Magnesium ersetzt werden. Die nach dem bekannten Verfahren hergestellten Produkte haben einen scheinbaren Porendurchmesser von 3 Å und nehmen außer Wasser und Ammoniak keines der technisch verwendeten Gase auf (DE-AS-1 567 588).

Die DE-B-1 792 743 offenbart magnesiumsilikatgebundene Zeolithgranulate, deren Zeolithkomponente nicht ausschließlich Magnesium enthält.

Aufgabe der Erfindung ist es, magnesiumsilikatgebundene Zeolithgranulate, welche neben Wasser und Ammoniak auch andere Moleküle adsorbieren können, herzustellen.

Gegenstand der Erfindung sind magnesiumsilikatgebundenen Zeolithgranulate vom Typ Zeolith A dadurch gekennzeichnet, daß sie als Zeolithkomponente A einen Magnesium-Natrium-Zeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | $\geq$ 22 | 20 | 30 | 20 | 0,8 |
| $NH_3$ | $\geq$ 10 | 20 | 30 | 620 | 0,85 |
| $CH_3OH$ | $\geq$ 15 | 20 | 30 | 150 | 1,0 |
| $CO_2$ | $\geq$ 8 | 20 | 30 | 150 | 1,0 |
| n-Hexan | $\leq$ 4 | 20 | 30 | 580 | 1,1 |

* (zu adsorbierendes Gas wurde mit Trägerluft verdünnt, Angabe in l Gasgemisch pro Minute und pro Gramm Zeolith) aufweisen und einen Kinetik-Index für Wasser von wenigstens 0,8 haben.

Der Kinetik-Index ist der Quotient aus Belasung bei 30′ und bei 600′.

Diese magnesiumsilikatgebundenen Zeolithgranulate kann man herstellen, indem man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate gegebenenfalls zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40 bis 120 °C und gegebenenfalls in einer dritten Trockenstufe bei 121°–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht bei 40 bis 200 °C vorzugsweise bei 100 bis 120 °C trocknet und gegebenenfalls anschließend bei 300–600 °C, vorzugsweise 400 bis 450 °C, calciniert.

Ein weiterer Gegenstand der Erfindung sind die magnesiumsilikatgebundenen Zeolithgranulate vom Typ Zeolith A, die als Zeolithkomponente einen Kalium-Zeolith A enthalten und die folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | = 21 | 20 | 30 | 20 | 0,8 |
| $NH_3$ | = 7 | 20 | 30 | 620 | 0,85 |
| $CH_3OH$ | = 6 | 20 | 30 | 150 | 1,0 |
| $CO_2$ | = 2 | 20 | 30 | 150 | 1,0 |
| n-Hexan | = 3 | 20 | 30 | 580 | 1,1 |

* (zu adsorbierendes Gas wurde mit Trägerluft verdünnt, Angabe in l Gasgemisch pro Minute und pro Gramm Zeolith) aufweisen und einen Kinetik-Index für Wasser von wenigstens 0,7 haben.

Diese magnesiumsilikatgebundenen Zeolith-granulate kann man herstellen, indem man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40–120 °C und gegebenenfalls in einer dritten Trockenstufe bei 121–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht, anschließend mit einer wäßrigen Kaliumsalzlösung behandelt, wäscht, bei 40 bis 200 °C vorzugsweise 100 bis 120 °C trocknet und gegebenenfalls anschließend bei 300 bis 550 °C, vorzugsweise 350 bis 450 °C, calciniert.

Die erfindungsgemässen magnesiumsilikatgebundenen Zeolithgranulate vom Typ Zeolith A können als Zeolithkomponente einen Natrium-Zeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---------|--------|----------|---------------------|-----------------------------------|-------------------------------|
| $H_2O$ | = 24 | 20 | 30 | 20 | 0,8 |
| $NH_3$ | = 10 | 20 | 30 | 620 | 0,85 |
| $CH_3OH$ | = 15 | 20 | 30 | 150 | 1,0 |
| $CO_2$ | = 10 | 20 | 30 | 150 | 1,0 |
| n-Hexan | = 4 | 20 | 30 | 580 | 1,1 |

* (zu adsorbierendes Gas wurde mit Trägerluft verdünnt. Angaben in l Gasgemisch pro Minute und pro Gramm Zeolith) aufweisen und einen Kinetik-Index von wenigstens 0,8 haben.

Diese magnesiumsilikatgebundenen Zeolith-granulate kann man herstellen, indem man pulverförmigen Zeolith A in einem Mischer vorlegt, Natriumsilikatlösung hinzugibt, solange mischt, bis man ein Zeolithgranulat mit einer Korngröße von wenigstens 0,1 mm erhält, diese Zeolithgranulate gegebenenfalls nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40 bis 120 °C und gegebenenfalls in einer dritten Trockenstufe bei 121 °C–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht, anschließend mit einer wäßrigen Natriumsalzlösung behandelt, wäscht, bei 40 bis 200 °C, vorzugsweise 100 bis 120 °C trocknet und gegebenenfalls anschließend bei 300 bis 600 °C, vorzugsweise 400 bis 500 °C, calciniert.

In einer weiteren Ausführungsform können die magnesiumsilikatgebundenen Zeolithgranulate vom Typ Zeolith A als Zeolithkomponente einen Calcium-Zeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---------|--------|----------|---------------------|-----------------------------------|-------------------------------|
| $H_2O$ | ≧ 22 | 20 | 30 | 20 | 0,8 |
| $NH_3$ | ≧ 10 | 20 | 30 | 620 | 0,85 |
| $CH_3OH$ | ≧ 15 | 20 | 30 | 150 | 1,0 |
| $CO_2$ | ≧ 14 | 20 | 30 | 150 | 1,0 |
| n-Hexan | ≧ 12 | 20 | 30 | 580 | 1,1 |

* (zu adsorbierendes Gas wurde mit Trägerluft verdünnt; Angabe in l Gasgemisch pro Minute und pro Gramm Zeolith) aufweisen und einen Kinetik-Index von wenigstens 0,8 haben.

Diese magnesiumsilikatgebundenen Zeolith-granulate kann man herstellen, indem man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate

nulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40 bis 120 °C und gegebenenfalls in einer dritten Trockenstufe bei 121°–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht, anschließend mit einer wäßrigen Calciumsalzlösung behandelt, wäscht, bei 40 bis 200 °C, vorzugsweise 100 bis 120 °C, trocknet und gegebenenfalls anschließend bei 300 bis 650 °C, vorzugsweise 450 bis 600 °C, calciniert.

Als Zeolith A kann ein pulverförmiger Zeolith, der gemäß DE-OS-2 447 021, DE-OS-2 517 218, DE-OS-2 651 419, DE-OS-2 651 420, DE-OS-2 651 436, DE-OS-2 651 437, DE-OS-2 651 445 und/oder DE-OS-2 651 485 hergestellt wurde und die dort aufgeführte Teilchengrößenverteilung aufweist, eingesetzt werden.

Vorzugsweise wird ein Zeolithpulver des Typs A gemäß DE-OS-2 651 485 verwendet.

Der Wassergehalt des Zeolithen kann 0,1–27%, bevorzugt 15 bis 22% betragen.

Die Zeolithpulver werden vorzugsweise in ihrer Natriumform eingesetzt. Die Natriumsilikatlösung hat vorzugsweise einen Modul $SiO_2 : Na_2O$ von 1,0 bis 3,4 und einen Gehalt an $Na_2O$ von 2–20 Gew.-% und an $SiO_2$ von 5–31 Gew.-%.

Das Gemisch aus Zeolith A und Natriumsilikat kann die Komponenten im Verhältnis $1,2 \pm 0,2$ $Na_2O : Al_2O_3 : 2,4 \pm 0,4$ $SiO_2 : 12 \pm 3$ $H_2O$ enthalten.

Als Mischer können handelsübliche Mischer eingesetzt werden, die vorzugsweise eine Aufdüsvorrichtung, wie Pflugscharmischer, Schneckenmischer, Mischgranulatoren u. ä., enthalten.

Als Nachrollvorrichtung kann ein bekanntes Aggregat, wie Granulierteller, Dragiertrommel u. ä., verwendet werden. Hierbei wird eine mechanische Verdichtung und Abrundung des Granulates sowie eine Verengung der Korngrößenverteilung erzielt.

Die Trocknung des Zeolithgranulates kann in bekannten Vorrichtungen, wie Trockenschränken, Bandtrocknern, Wirbelschichttrockner kontinuierlich oder diskontinuierlich durchgeführt werden. Vorzugsweise wird ein Wirbelschichttrockner eingesetzt, da hierbei gleichzeitig eine Entstaubung des Granulates erzielt wird. Die Abluft des Trocknungsschrittes kann im Kreislauf geführt werden, wobei zur Einstellung des Kohlendioxidgehaltes von weniger als 200 ppm die Trocknungsabluft mit der entsprechenden Menge an Frischluft vermischt wird.

Die Trocknung kann ebensogut in einem Inertgasstrom, wie Stickstoff, durchgeführt werden, d. h., die Anwesenheit von Kohlendioxid ist nicht notwendig.

Das Trocknungsgas kann einen Wasserdampfpartialdruck von 0,01 Torr bis 750 Torr, vorzugsweise 0,1 bis 400 Torr aufweisen, wobei der Partialdruck des Wasserdampfes im Trocknungsgas unterhalb des Sättigungsdruckes bei der entsprechenden Trockentemperatur liegen muß.

Gegebenenfalls folgt eine Siebung mit bekannten Siebvorrichtungen, wobei die Siebung wahlweise an feuchtem oder an getrocknetem Granulat durchgeführt werden kann. Im Falle der Feuchtsiebung muß eine mechanische Zerstörung des Granulates vermieden werden, jedoch kann hierbei das Fehlkorn (Über- und Unterkorn) leicht mechanisch zerkleinert und in den Granulationsprozeß zurückgeführt werden. Das getrocknete Zeolithgranulat kann bei Temperaturen von 300 °C bis 500 °C, höchstens 600 °C in bekannten Apparaten, wie Muffelofen, Drehrohr, Röhrenofen o. ä. kontinuierlich oder diskontinuierlich aktiviert werden.

Die Behandlung der Zeolithgranulate mit Magnesiumsalzlösungen kann in bekannten Vorrichtungen, wie z. B. Austauschersäulen, durchgeführt werden. Die Behandlungstemperatur kann 5 bis 100 °C, vorzugsweise 40 bis 90 °C betragen. Die Konzentration der Magnesiumsalzlösung kann 0,01 bis 10 molar, vorzugsweise 0,1 bis 3 molar betragen. Als Magnesiumsalz können Chlorid, Sulfat und Nitrat eingesetzt werden. Die Austauschzeit kann 1 Min. bis 6 h, vorzugsweise 30 Min. bis 3 h betragen. Wesentlich ist dabei, daß die Natriumionen des Bindemittels vollständig gegen Magnesiumionen ausgetauscht werden. Ein vollständiger Austausch der Natriumionen in dem Zeolithen wird dadurch verhindert, daß man die bereits ausgetauschten Natriumionen in der Magnesiumsalzlösung, die vorzugsweise während der Behandlung umgepumpt wird, beläßt. Nach der folgenden Wäsche mit Wasser kann die Behandlung mit Metallsalzlösungen erfolgen.

Für die Behandlung der Zeolithgranulate mit Metallsalzlösungen eignen sich solche Metallsalze, deren Kationen in das Gerüst des Zeolithen einzudringen vermögen.

Neben Kalium, Natrium oder Calcium-Ionen können auch $Ba^{2+}$, $Zn^{2+}$, $Ag^+$ und andere Kationen verwendet werden.

Die Behandlung der magnesiumsilikatgebundenen Zeolithgranulate mit Metallsalzlösung kann in bekannten Vorrichtungen, wie z. B. Austauschersäulen, durchgeführt werden. Vorzugsweise wird die Behandlung mit Metallsalzlösung anschließend in derselben Vorrichtung durchgeführt, in der die Behandlung mit Magnesiumsalzlösung erfolgte.

Die Behandlungstemperatur kann 5 bis 100 °C, vorzugsweise 40 bis 90 °C betragen.

Die Konzentration der Metallsalzlösung kann 0,01 bis 10 molar, vorzugsweise 0,1 bis 3 molar betragen.

Die erfindungsgemäßen Zeolithgranulate weisen dann nach Abschluß der Behandlung mit wäßrigen Metallsalzlösungen einen Gehalt an Natriumionen auf. Dieser Natriumionengehalt ist auf die Zeolithkomponente des Zeolithgranulates beschränkt während das Bindemittel frei von Natriumionen ist.

Auf Grund des erfindungsgemäßen Herstellverfahrens ist das silikatische Bindemittel kein Zeolith.

Die erfindungsgemässen magnesiumsilikatgebundenen Zeolithgranulate können mit grossem Vorteil als Adsorptionsmittel in gasförmigen und flüssigen Systemen eingesetzt werden.

So können u. a. die folgenden Moleküle absorbieren: $H_2O$, $NH_3$, $CH_3$–OH, $CO_2$ und n-Hexan.

So können beispielsweise Pfeifen- und Zigarettenfilter mit diesen Granulaten ausgestattet sein. Ein weiteres Anwendungsgebiet ist die Trocknung von organischen Lösungsmitteln.

Beispiel 1
(Herstellung der Ausgangsverbindung)

In einem Schneckenmischer werden 100 kg Zeolith A (DE-OS-2 651 485, 21% Wassergehalt) vorgelegt. Hierzu werden 49 kg Wasserglas (Modul 3,38, $Na_2O$ = 4,8 Gew.-%, $SiO_2$ = 15,7 Gew.-%) zugedüst. Man erhält Zeolithgranulate mit einer Korngröße von 0,1 bis 3 mm, die anschließend in einem Granulierteller nachgerollt werden. Man erhält so ein engeres Kornspektrum (0,3–2,5 mm). Die Zeolithgranulate werden im feuchten Zustand in Kornfraktionen < 1 mm, 1–2 mm und > 2 mm gesiebt. Die Kornfraktion 1–2 mm wird unter Bezeichnung Beispiel 1A wie unten folgt weiterverarbeitet.

Die Kornfraktion von 1–2 mm (Beispiel 1A) wird in einem Fließbetttrockner bei 35 °C getrocknet. Hierbei wird ein Teil der Abluft im Kreis geführt, sodaß der $CO_2$-Gehalt der Luft 150 ppm beträgt. Der Wasserdampfpartialdruck beträgt hierbei 21 mm. Die so erhaltenen Zeolithgranulate werden unter der Bezeichnung 1B wie unten folgt weiterverarbeitet.

Die Granulate nach Beispiel 1B werden in einem Drehrohr bei 420 °C aktiviert. Die so erhaltenen Zeolithgranulate werden unter der Bezeichnung Beispiel 1C wie unten folgt, weiterverarbeitet. Sie besitzten folgende Adsorptionseigenschaften:

Tabelle 1a

| Melekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | 16,2 | 20 | 30 | 20 | 0,8 |
| $NH_3$ | 7,5 | 20 | 30 | 620 | 0,85 |
| $CH_3OH$ | 1,1 | 20 | 30 | 150 | 1,0 |
| $n-C_6H_{14}$ | 0,3 | 20 | 30 | 150 | 1,0 |
| $CO_2$ | 2,0 | 20 | 30 | 580 | 1,1 |

* (zu adsorbierendes Gas wurde mit Trägerluft verdünnt, Angabe in l Gasgemisch pro Minute und pro Gramm Zeolith).

Die Kinetik der Wasseraufnahme ist in Tabelle 1b dargestellt:

Tabelle 1b

| Adsorptionszeit | min. | 10 | 20 | 30 | 60 | 120 | 600* |
|---|---|---|---|---|---|---|---|
| Wasseraufnahme | % | 8,1 | 13,3 | 16,2 | 19,6 | 20,6 | 23,4 |

* Sättigung

Bedingungen wie bei Tabelle 1a

Der Kinetikindex (quotient aus Beladung bei 30' und bei 600') beträgt 0,69.

Beispiel 2
Herstellung von magnesiumsilikatgebunden Granulaten in der Magnesium-Natrium-Form

18,5 kg feuchte Zeolithgranulate gemäß Beispiel 1A werden in eine Säule (l = 1 m, d = 0,2 m) gegeben, welche mit einer 0,5 m Magnesiumchloridlösung gefüllt ist. Die Austauschersäule ist mit einem heizbaren Vorratsbehälter im Kreislauf geschaltet (Gesamtvolumen der Lösung 20 l). Die Lösung wird 3 h bei Raumtemperatur, dann 2 h bei 60 °C im Kreis gefahren. Die Zeolithgranulate werden anschließend mit Wasser gewaschen bis die Leitfähigkeit im Waschwasser < 500 µS beträgt. Das Trocknen erfolgt bei 110 °C im Trockenschrank und das anschließende Aktivieren bei 400 °C im Muffelofen. Das Produkt zeigt folgende Adsorptionseigenschaften:

Tabelle 2a

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | 25,9 | 20 | 30 | 20 | 0,8 |
| $NH_3$ | 14,4 | 20 | 30 | 620 | 0,85 |
| $CH_3OH$ | 18,4 | 20 | 30 | 150 | 1,0 |
| $n-C_6H_{14}$ | 4,0 | 20 | 30 | 150 | 1,0 |
| $CO_2$ | 13,9 | 20 | 30 | 580 | 1,1 |

* (zu adsorbierendes Gas wurde mit Trägerluft verdünnt, Angabe in l Gasgemisch pro Minute und pro Gramm Zeolith).

Die Kinetik der Wasseraufnahme ist in Tabelle 2b dargestellt.

Tabelle 2b

| Adsorptionszeit | min. | 10 | 20 | 30 | 60 | 120 | 600* |
|---|---|---|---|---|---|---|---|
| Wasseraufnahme | % | 15,4 | 24,0 | 25,9 | 26,3 | 26,4 | 26,4 |

* Sättigung

Der Kinetik-Index (Quotient aus Beladung bei 30′ und 600′) beträgt 0,98.
Bedingungen wie in Tabelle 2a angegeben.

Beispiel 3
Herstellung von magnesiumsilikatgebundenen Zeolithgranulaten in der Mg-Na-Form

16,3 kg getrocknete Zeolithgranulate gemäß Beispiel 1B werden wie unter Beispiel 2 beschrieben, behandelt. Sie besitzten folgende Adsorptionseigenschaften:

Tabelle 3a

| Molekül | Gew.-% | Temp. °C | Adsorptionszeit min | Partialdruck Torr [$\times$ 1,33·10² Pa] | spez. Beaufschlagung l/min g* |
|---|---|---|---|---|---|
| $H_2O$ | 25,7 | 20 | 30 | 20 | 0,8 |
| $NH_3$ | 14,3 | 20 | 30 | 620 | 0,85 |
| $CH_3OH$ | 20,2 | 20 | 30 | 150 | 1,0 |
| $n-C_6H_{14}$ | 3,6 | 20 | 30 | 150 | 1,0 |
| $CO_2$ | 14,5 | 20 | 30 | 580 | 1,1 |

* (zu adsorbierendes Gas wurde mit Trägerluft verdünnt, Angabe in l Gasgemisch pro Minute und pro Gramm Zeolith).

Die Kinetik der Wasseraufnahme ist in Tabelle 3b dargestellt.

Tabelle 3b

| Adsorptionszeit | min. | 10 | 20 | 30 | 60 | 120 | 600* |
|---|---|---|---|---|---|---|---|
| Wasseraufnahme | % | 12,4 | 22,3 | 25,7 | 26,9 | 26,9 | 26,9 |

* Sättigung

Der Kinetik-Index (Quotient aus Beladung bei 30′ und 600′) beträgt 0,96.
Bedingungen wie in Tabelle 3a angegeben.

Beispiel 4
Herstellung von magnesiumsilikatgebundenen Zeolithgranulaten in der Magnesium-Natriumform
In einem 2 m³-Behälter werden 550 kg aktivierte Zeolithgranulate gemäß Beispiel 1C zu 1000 l einer 0,3 molaren Magnesiumchloridlösung zugegeben. Die Lösung wird 3 h bei 80 °C umgepumpt. Die Zeolithgranulate werden anschließend mit Wasser gewaschen, bis die Leitfähigkeit im Waschwasser < 500 µS beträgt.
Die Zeolithgranulate werden in einem Trockenschrank bei 110 °C getrocknet und anschließend in einem Drehrohr bei 500 °C aktiviert. Sie besitzen folgende Adsorptionseigenschaften:

Tabelle 4a

| Molekül | Gew.-% | Temp. °C | Adsorptionszeit min | Partialdruck Torr [$\times$ 1,33·10² Pa] | spez. Beaufschlagung l/min g* |
|---|---|---|---|---|---|
| $H_2O$ | 23,7 | 20 | 30 | 20 | 0,8 |
| $NH_3$ | 11,7 | 20 | 30 | 620 | 0,85 |
| $CH_3OH$ | 15,7 | 20 | 30 | 150 | 1,0 |
| $n-C_6H_{14}$ | 2,7 | 20 | 30 | 150 | 1,0 |
| $CO_2$ | 8,4 | 20 | 30 | 580 | 1,1 |

* (zu adsorbierendes Gas wurde mit Trägerluft verdünnt; Angabe in l Gasgemisch pro Minute und pro Gramm Zeolith).

Die Kinetik der Wasseraufnahme ist in Tabelle 4b dargestellt.

Tabelle 4b

| Adsorptionszeit | min. | 10 | 20 | 30 | 60 | 120 | 600* |
|---|---|---|---|---|---|---|---|
| Wasseraufnahme | % | 11,8 | 19,8 | 23,7 | 25,0 | 25,1 | 25,1 |

* Sättigung

Bedingungen wie in Tabelle 4a angegeben.

Der Kinetik-Index (Quotient aus Beladung bei 30′ und bei 600′) beträgt 0,94.

Beispiel 5

Herstellung von magnesiumsilikatgebundenen Zeolithgranulaten in der Kaliumform

12 kg Zeolithgranulate gemäß Beispiel 1C werden in eine Säule (l = 1 m, d = 0,2 m), welche mit einer 0,5 m Magnesiumchloridlösung gefüllt ist, gegeben. Die Austauschersäule ist mit einem heizbaren Vorratsbehälter im Kreislauf geschaltet (Gesamtvolumen der Lösung 20 l). Die Lösung wird 3 h bei 80 °C im Kreis gefahren. Die Zeolithgranulate werden dann mit Wasser gewaschen, und anschließend 30 Minuten bei 60 °C mit 20 l einer 1-molaren Kaliumchlorid-Lösung behandelt. Die Zeolithgranulate werden anschließend solange gewaschen, bis die Leitfähigkeit im Waschwasser < 500 μS beträgt.

Die Zeolithgranulate werden in einem Trockenschrank bei 110 °C getrocknet und in einem Muffelofen bei 400 °C aktiviert. Sie besitzen folgende Adsorptionseigenschaften:

Tabelle 5a

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | 17,5 | 20 | 30 | 20 | 0,8 |
| $NH_3$ | 7,7 | 20 | 30 | 620 | 0,85 |
| $CH_3OH$ | 5,4 | 20 | 30 | 150 | 1,0 |
| $n-C_6H_{14}$ | 2,1 | 20 | 30 | 150 | 1,0 |
| $CO_2$ | 1,2 | 20 | 30 | 580 | 1,1 |

* (zu adsorbierendes Gas wurde mit Trägerluft verdünnt; Angabe in 1 Gasgemisch pro Minute und pro Gramm Zeolith).

Die Kinetik der Wasseraufnahme ist in Tabelle 5b dargestellt.

Tabelle 5b

| Adsorptionszeit | min. | 10 | 20 | 30 | 60 | 120 | 600* |
|---|---|---|---|---|---|---|---|
| Wasseraufnahme | % | 8,4 | 13,7 | 17,5 | 20,9 | 21,5 | 22,2 |

* Sättigung

Bedingungen wie in Tabelle 5a angegeben.

Der Kinetik-Index (Quotient der Beladung bei 30′ und bei 600′) beträgt 0,79.

Beispiel 6

Herstellung von magnesiumsilikatgebundenen Zeolithgranulaten in der Natriumform.

12 kg Zeolithgranulate gemäß Beispiel 1 werden in eine Säule (l = 1 m, d = 0,2 m), welche mit einer 0,5 m Magnesiumchloridlösung gefüllt ist, gegeben. Die Austauschersäule ist mit einem heizbaren Vorratsbehälter in Kreislauf geschaltet (Gesamtvolumen zur Lösung 20 l). Die Lösung wird 3 h bei 80 °C im Kreis gefahren. Die Zeolithgranulate werden dann mit Wasser gewaschen, und anschließend 2 h bei 60 °C mit 20 l einer 1-molaren Natriumchlorid-Lösung behandelt. Die Zeolithgranulate werden solange gewaschen, bis die Leitfähigkeit im Waschwasser < 500 μS beträgt. Die Zeolithgranulate werden anschließend in einem Trockenschrank bei 110 °C getrocknet und in einem Muffelofen bei 450 °C aktiviert. Sie besitzen die folgenden Adsorptionseigenschaften:

Tabelle 6a

| Molekül | Gew.-% | Temp. °C | Adsorptionszeit min | Partialdruck Torr [× 1,33·10² Pa] | spez. Beauf- schlagung l/min g* |
|---------|--------|----------|---------------------|-----------------------------------|---------------------------------|
| $H_2O$ | 24,4 | 20 | 30 | 20 | 0,8 |
| $NH_3$ | 13,2 | 20 | 30 | 620 | 0,85 |
| $CH_3OH$ | 17,9 | 20 | 30 | 150 | 1,0 |
| $n-C_6H_{14}$ | 3,3 | 20 | 30 | 150 | 1,0 |
| $CO_2$ | 13,8 | 20 | 30 | 580 | 1,1 |

* (zu adsorbierendes Gas wurde mit Trägerluft verdünnt; Angabe in l Gasgemisch pro Minute und pro Gramm Zeolith).

Die Kinetik der Wasseraufnahme** ist in Tabelle 6b dargestellt.

Tabelle 6b

| Adsorptionszeit | min. | 10 | 20 | 30 | 60 | 120 | 600* |
|-----------------|------|------|------|------|------|------|------|
| Wasseraufnahme | % | 17,7 | 23,5 | 24,4 | 24,7 | 24,7 | 24,8 |

* Sättigung
** Bedingungen wie in Tabelle 6a angegeben.

Der Kinetik-Index (Quotient der Beladung bei 30' und 600') beträgt 0,98.

Beispiel 7
Herstellung von magnesiumsilikatgebundenen Zeolithgranulaten in der Calciumform.

12 kg Zeolithgranulate gemäß Beispiel 1C werden in eine Säule (l = 1 m, d = 0,2 m), welche mit einer 0,5 m Magnesiumchloridlösung gefüllt ist, gegeben. Die Austauschersäule ist mit einem heizbaren Vorratsbehälter im Kreislauf geschaltet (Gesamtvolumen der Lösung 20 l). Die Lösung wird 3 h bei 80 °C im Kreis gefahren. Die Zeolithgranulate werden dann mit Wasser gewaschen, und anschließend 2 h bei 60 °C mit 20 l einer 1-molaren Calciumchlorid-Lösung behandelt. Die Zeolithgranulate werden anschließend solange gewaschen, bis die Leitfähigkeit im Waschwasser < 500 µS beträgt. Die so erhaltenen Zeolithgranulate werden in einem Trockenschrank bei 110 °C getrocknet und in einem Muffelofen bei 500 °C aktiviert. Sie besitzen die folgenden Adsorptionseigenschaften:

Tabelle 7a

| Molekül | Gew.-% | Temp. °C | Adsorptionszeit min | Partialdruck Torr [× 1,33·10² Pa] | spez. Beauf- schlagung l/min g* |
|---------|--------|----------|---------------------|-----------------------------------|---------------------------------|
| $H_2O$ | 22,0 | 20 | 30 | 20 | 0,8 |
| $NH_3$ | 12,2 | 20 | 30 | 620 | 0,85 |
| $CH_3OH$ | 18,9 | 20 | 30 | 150 | 1,0 |
| $n-C_6H_{14}$ | 13,5 | 20 | 30 | 150 | 1,0 |
| $CO_2$ | 16,4 | 20 | 30 | 150 | 1,0 |

* (zu adsorbierendes Gas wurde mit Trägerluft verdünnt; Angabe in l Gasgemisch pro Minute und pro Gramm Zeolith).

Die Kinetik der Wasseraufnahme ist in Tabelle 7b dargestellt.

Tabelle 7b

| Adsorptionszeit | min. | 10 | 20 | 30 | 60 | 120 | 600* |
|-----------------|------|------|------|------|------|------|------|
| Wasseraufnahme | % | 12,7 | 19,5 | 22,0 | 23,3 | 23,2 | 23,4 |

* Sättigung
** Bedingungen wie bei Tabelle 7a.

Der Kinetik-Index (Qutoient aus Beladung bei 30' und 600') beträgt 0,94.

Beispiel 8
Trocknung von Lösungsmitteln

In einem Kolben wurden 1 l Ethanol mit 1000 ppm Wassergehalt mit 100 gr Zeolithgranulate gemäß Beispiel 5 bei Raumtemperatur versetzt.

Das Ethanol hatte nach 24 Stunden ein Restwassergehalt von 20 ppm.

Beispiel 9
Verwendung in Pfeifenfiltern

Bei einem Proberauchen mit 4 Testrauchern wurde das erfindungsgemäße Zeolithgranulat nach Beispiel 4 in Tabakspfeifenfiltern verwendet und mit bekannten Aktivkohlefiltern verglichen.

Die Testraucher waren einstimmig der Auffassung, daß die mit den erfindungsgemäßen Zeolithgranulaten ausgestatteten Filter einen erfrischenderen und angenehmereren Rauchgenuß erbrachten.

**Patentansprüche**

1. Magnesiumsilikatgebundene Zeolithgranulate vom Typ Zeolith A, dadurch gekennzeichnet, daß sie als Zeolith des Typs A einen Magnesium-Natrium-Zeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | ≧ 22 | 20 | 30 | 20 | 0,8 |
| $NH_3$ | ≧ 10 | 20 | 30 | 620 | 0,85 |
| $CH_3OH$ | ≧ 15 | 20 | 30 | 150 | 1,0 |
| $CO_2$ | ≧ 8 | 20 | 30 | 150 | 1,0 |
| n-Hexan ($C_6H_{14}$) | ≦ 4 | 20 | 30 | 580 | 1,1 |

* (zu adsorbierendes Gas wurde mit Trägerluft verdünnt; Angabe in l Gasgemisch pro Minute und pro Gramm Zeolith).

aufweisen und einen Kinetik-Index für Wasser von wenigstens 0,8 haben.

2. Magnesiumsilikatgebundene Zeolithgranulate vom Typ Zeolith A, dadurch gekennzeichnet, daß sie als Zeolith des Typs A einen Kaliumzeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | ≧ 21 | 20 | 30 | 20 | 0,8 |
| $NH_3$ | ≧ 7 | 20 | 30 | 620 | 0,85 |
| $CH_3OH$ | ≦ 6 | 20 | 30 | 150 | 1,0 |
| $CO_2$ | ≦ 2 | 20 | 30 | 150 | 1,0 |
| n-Hexan | ≦ 3 | 20 | 30 | 580 | 1,1 |

* (zu adsorbierendes Gas wurde mit Trägerluft verdünnt; Angabe in l Gasgemisch pro Minute und pro Gramm Zeolith).

aufweisen und einen Kinetik-Index von wenigstens 0,7 haben.

3. Magnesiumsilikatgebundene Zeolithgranulate vom Typ Zeolith A, dadurch gekennzeichnet, daß sie als Zeolith des Typs A einen Natriumzeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| $H_2O$ | ≧ 24 | 20 | 30 | 20 | 0,8 |
| $NH_3$ | ≧ 10 | 20 | 30 | 620 | 0,85 |
| $CH_3OH$ | ≧ 15 | 20 | 30 | 150 | 1,0 |
| $CO_2$ | ≧ 10 | 20 | 30 | 150 | 1,0 |
| n-Hexan | ≦ 4 | 20 | 30 | 580 | 1,1 |

* (zu adsorbierendes Gas wurde mit Trägerluft verdünnt; Angabe in l Gasgemisch pro Minute und pro Gramm Zeolith).

aufweisen und einen Kinetik-Index für Wasser von wenigstens 0,8 haben.

4. Magnesiumsilikatgebundene Zeolithgranulate vom Typ Zeolith A, dadurch gekennzeichnet, daß sie als Zeolith des Typs A einen Calcium-Zeolith A enthalten, folgende Adsorptionsdaten

| Molekül | Gew.-% | Temp. °C | Adsorptionszeit min | Partialdruck Torr [× 1,33·10² Pa] | spez. Beaufschlagung l/min g* |
|---|---|---|---|---|---|
| H₂O | ≧ 22 | 20 | 30 | 20 | 0,8 |
| NH₃ | ≧ 10 | 20 | 30 | 620 | 0,85 |
| CH₃OH | ≧ 15 | 20 | 30 | 150 | 1,0 |
| CO₂ | ≧ 14 | 20 | 30 | 150 | 1,0 |
| n-Hexan | ≧ 12 | 20 | 20 | 580 | 1,1 |

* (zu adsorbierendes Gas wurde mit Trägerluft verdünnt; Angabe in l Gasgemisch pro Minute und pro Gramm Zeolith).

aufweisen und einen Kinetik-Index für Wasser von wenigstens 0,8 haben.

5. Verfahren zur Herstellung der magnesiumsilikatgebundenen Zeolithgranulate gemäß Anspruch 1, dadurch gekennzeichnet, daß man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40–120 °C und gegebenenfalls in einer dritten Trockenstufe bei 121–200 °C unter sonst gleichen Bedingungen trocknet und anschließend die so erhaltenen Zeolithgranulate bei Temperaturen von höchstens 600 °C aktiviert, die so erhaltenen Zeolithgranulate mit einer wäßrigen Magnesiumsalzlösung behandelt, wäscht, bei 40 bis 200 °C, vorzugsweise bei 100 bis 120 °C, trocknet und gegebenenfalls anschließend bei 300–600 °C, vorzugsweise 400 bis 450 °C, calciniert.

6. Verfahren zur Herstellung der magnesiumsilikatgebundenen Zeolithgranulate nach Anspruch 2, dadurch gekennzeichnet, daß man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40–120 °C und gegebenenfalls in einer dritten Trockenstufe bei 121–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht, anschließend mit einer wäßrigen Kaliumsalzlösung behandelt, wäscht, bei 40 bis 200 °C, vorzugsweise 100 bis 120 °C, trocknet und gegebenenfalls anschließend bei 300 bis 550 °C, vorzugsweise 350 bis 450 °C, calciniert.

7. Verfahren zur Herstellung der magnesiumsilikatgebundenen Zeolithgranulate nach Anspruch 3, dadurch gekennzeichnet, daß man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40 bis 120 °C und gegebenenfalls in einer dritten Trockenstufe bei 121°–200 °C unter sonst gleichen Bedingungen trocknet und gegebenenfalls anschließend die so erhaltenen Zeolithgranulate bei Temperaturen von höchstens 600 °C aktiviert, die so erhaltenen Zeolithgranulate mit einer wäßrigen Magnesiumsalzlösung behandelt, wäscht, anschließend mit einer wäßrigen Natriumsalzlösung behandelt, wäscht, bei 40 bis 200 °C, vorzugsweise 100 bis 120 °C, trocknet und gegebenenfalls anschließend bei 300 bis 600 °C, vorzugsweise 400 bis 500 °C, calciniert.

8. Verfahren zur Herstellung der magnesiumsilikatgebundenen Zeolithgranulate nach Anspruch 4, dadurch gekennzeichnet, daß man pulverförmigen Zeolith A in einem Mischer vorlegt, Natriumsilikatlösung hinzugibt, solange mischt, bis man Zeolithgranulate mit einer Korngröße von wenigstens 0,1 mm erhält, diese Zeolithgranulate gegebenenfalls nachrollt, die feuchten Zeolithgranulate zunächst bei Temperaturen von 20 bis 39 °C trocknet, wobei man den Kohlendioxidgehalt der Trockenluft auf weniger als 200 ppm einstellt, anschließend gegebenenfalls in einem zweiten Trockenschritt bei Temperaturen von 40 bis 120 °C und gegebenenfalls in einer dritten Trockenstufe bei 121°–200 °C unter sonst gleichen Bedingungen trocknet und gegebenenfalls anschließend die so erhaltenen Zeolithgranulate bei Temperaturen von höchstens 600 °C aktiviert, und die so erhaltenen Zeolithgranulate mit einer wäßrigen Magnesiumsalzlösung behandelt, wäscht, anschließend mit einer wäßrigen Calciumsalzlösung behandelt, wäscht, bei 40 bis 200 °C, vorzugsweise 100 bis 120 °C, trocknet und gegebenenfalls anschließend bei 300 bis 650 °C, vorzugsweise 450 bis 600 °C calciniert.

9. Verwendung der magnesiumsilikatgebundenen Zeolithgranulate nach den Ansprüchen 1, 2, 3 und 4 als Adsorptionsmittel in gasförmigen und flüssigen Systemen.

10. Verwendung der magnesiumsilikatgebundenen Zeolithgranulate gemäß Anspruch 9 als Adsorptionsmittel in Pfeifen- und Zigarettenfiltern.

11. Verwendung der magnesiumsilikatgebundenen Zeolithgranulate gemäß Anspruch 10 zur Trocknung von organischen Lösungsmitteln.

## Claims

1. Magnesium-silicate-bonded zeolite granulates of the zeolite A type, characterized in that they contain a magnesium-sodium zeolite A as the type A zeolite, have the following adsorption data:

| Molecule | % by weight | Temp. °C | Adsorption time mins. | Partial pressure Torr [$\times 1.33 \cdot 10^2$ Pa] | Specific charge l/min g* |
|---|---|---|---|---|---|
| $H_2O$ | $\geq 22$ | 20 | 30 | 20 | 0.8 |
| $NH_3$ | $\geq 10$ | 20 | 30 | 620 | 0.85 |
| $CH_3OH$ | $\geq 15$ | 20 | 30 | 150 | 1.0 |
| $CO_2$ | $\geq 8$ | 20 | 30 | 150 | 1.0 |
| n-hexane ($C_6H_{14}$) | $\leq 4$ | 20 | 30 | 580 | 1.1 |

* (gas to be adsorbed was diluted with carrier air; expressed in l gas mixture per minute and per gram zeolite).

and have a kinetic index for water of at least 0.8.

2. Magnesium-silicate-bonded zeolite granulates of the zeolite A type, characterized in that they contain a potassium zeolite A as the type A zeolite, have the following adsorption data

| Molecule | % by weight | Temp. °C | Adsorption time mins. | Partial pressure Torr [$\times 1.33 \cdot 10^2$ Pa] | Specific charge l/min g* |
|---|---|---|---|---|---|
| $H_2O$ | $\geq 21$ | 20 | 30 | 20 | 0.8 |
| $NH_3$ | $\geq 7$ | 20 | 30 | 620 | 0.85 |
| $CH_3OH$ | $\leq 6$ | 20 | 30 | 150 | 1.0 |
| $CO_2$ | $\leq 2$ | 20 | 30 | 150 | 1.0 |
| n-hexane | $\leq 3$ | 20 | 30 | 580 | 1.1 |

* (gas to be adsorbed was diluted with carrier air; expressed in l gas mixture per minute and per gram zeolite).

and have a kinetic index of at least 0.7.

3. Magnesium-silicate-bonded zeolite granulates of the zeolite A type, characterized in that they contain a sodium zeolite A as the type A zeolite, have the following adsorption data

| Molecule | % by weight | Temp. °C | Adsorption time mins. | Partial pressure Torr [$\times 1.33 \cdot 10^2$ Pa] | Specific charge l/min g* |
|---|---|---|---|---|---|
| $H_2O$ | $\geq 24$ | 20 | 30 | 20 | 0.8 |
| $NH_3$ | $\geq 10$ | 20 | 30 | 620 | 0.85 |
| $CH_3OH$ | $\geq 15$ | 20 | 30 | 150 | 1.0 |
| $CO_2$ | $\geq 10$ | 20 | 30 | 150 | 1.0 |
| n-hexane | $\leq 4$ | 20 | 30 | 580 | 1.1 |

* (gas to be adsorbed was diluted with carrier air; expressed in l gas mixture per minute and per gram zeolite).

and have a kinetic index for water of at least 0.8.

4. Magnesium-silicate-bonded zeolite granulates of the zeolite A type, characterized in that they contain a calcium zeolite A as the type A zeolite, have the following adsorption data

| Molecule | % by weight | Temp. °C | Adsorption time mins. | Partial pressure Torr [× 1.33·10² Pa] | Specific charge l/min g* |
|---|---|---|---|---|---|
| $H_2O$ | $\geqq 22$ | 20 | 30 | 20 | 0.8 |
| $NH_3$ | $\geqq 10$ | 20 | 30 | 620 | 0.85 |
| $CH_3OH$ | $\geqq 15$ | 20 | 30 | 150 | 1.0 |
| $CO_2$ | $\geqq 14$ | 20 | 30 | 150 | 1.0 |
| n-hexane | $\geqq 12$ | 20 | 20 | 580 | 1.1 |

* (gas to be adsorbed was diluted with carrier air; expressed in l gas mixture per minute and per gram zeolite).

and have a kinetic index for water of at least 0.8.

5. A process for the production of the magnesium-silicate-bonded zeolite granulates claimed in claim 1, characterized in that the powder-form zeolite A is introduced into a mixer, sodium silicate solution is added, the contents of the mixer are mixed until zeolite granulates having a grain size of at least 0.1 mm are obtained, the zeolite granulates obtained are rerolled, the moist zeolite granulates are initially dried at temperatures of 20 to 39 °C, the carbon dioxide content of the drying air being adjusted to less than 200 ppm, and, in a second optional drying step, are dried under otherwise the same conditions at temperatures of 40 to 120 °C and, in a third optional drying step, at temperatures of 121 to 200 °C, the zeolite granulates thus obtained are activated at temperatures of at most 600 °C, the resulting zeolite granulates are treated with an aqueous magnesium salt solution, washed and dried at 40 to 200 °C and preferably at 100 to 120 °C and are then optionally calcined at 300 to 600 °C and preferably at 400 to 450 °C.

6. A process for the production of the magnesium-silicate-bonded zeolite granulates claimed in claim 2, characterized in that the powder-form zeolite A is introduced into a mixer, sodium silicate solution is added, the contents of the mixer are mixed until zeolite granulates having a grain size of at least 0.1 mm are obtained, the zeolite granulates obtained are optionally rerolled, the moist zeolite granulates are initially dried at temperatures of 20 to 39 °C, the carbon dioxide content of the drying air being adjusted to less than 200 ppm, and, in a second optional drying step, are dried under otherwise the same conditions at temperatures of 40 to 120 °C and, in a third optional drying step, at temperatures of 121 to 200 °C, the zeolite granulates thus obtained are activated at temperatures of at most 600 °C, the resulting zeolite granulates are treated with an aqueous magnesium salt solution, washed, subsequently treated with an aqueous potassium salt solution, dried at 40 to 200 °C and preferably at 100 to 120 °C and are then optionally calcined at 300 to 550 °C and preferably at 350 to 450 °C.

7. A process for the production of the magnesium-silicate-bonded zeolite granulates claimed in claim 3, characterized in that the powder-form zeolite A is introduced into a mixer, sodium silicate solution is added, the contents of the mixer are mixed until zeolite granulates having a grain size of at least 0.1 mm are obtained, the zeolite granulates obtained are optionally rerolled, the moist zeolite granulates are initially dried at temperatures of 20 to 39 °C, the carbon dioxide content of the drying air being adjusted to less than 200 ppm, and, in a second optional drying step, are dried under otherwise the same conditions at temperatures of 40 to 120 °C and, in a third optional drying step, at temperatures of 121 to 200 °C, the zeolite granulates thus obtained are activated at temperatures of at most 600 °C, the resulting zeolite granulates are treated with an aqueous magnesium salt solution, washed, subsequently treated with an aqueous sodium salt solution, dried at 40 to 200 °C and preferably at 100 to 120 °C and are then optionally calcined at 300 to 600 °C and preferably at 400 to 500 °C.

8. A process for the production of the magnesium-silicate-bonded zeolite granulates claimed in claim 4, characterized in that the powder-form zeolite A is introduced into a mixer, sodium silicate solution is added, the contents of the mixer are mixed until zeolite granulates having a grain size of at least 0.1 mm are obtained, the zeolite granulates obtained are optionally rerolled, the moist zeolite granulates are initially dried at temperatures of 20 to 39 °C, the carbon dioxide content of the drying air being adjusted to less than 200 ppm, and, in a second optional drying step, are dried under otherwise the same conditions at temperatures of 40 to 120 °C and, in a third optional drying step, at temperatures of 121 to 200 °C, the zeolite granulates thus obtained are activated at temperatures of at most 600 °C, the resulting zeolite granulates are treated with an aqueous magnesium salt solution, washed, subsequently treated with an aqueous calcium salt solution, dried at 40 to 200 °C and preferably at 100 to 120 °C and are then optionally calcined at 300 to 650 °C and preferably at 450 to 600 °C.

9. The use of the magnesium-silicate-bonded zeolite granulates claimed in claims 1, 2, 3 and 4 as adsorbents in gaseous and liquid systems.

10. The use of the magnesium-silicate-bonded zeolite granulates claimed in claim 9 as adsorbents in pipe and cigarette filters.

11. The use of the magnesium-silicate-bonded zeolite granulates claimed in claim 10 for drying organic solvents.

## Revendications

1. Granulés de zéolite du type zéolite A combinés au silicate de magnésium, caractérisés en ce qu'ils contiennent comme zéolite A une zéolite A sodium/magnésium qu'ils possèdent les données d'adsorption suivantes:

| Molécule | % en poids | Temps. °C | Durée d'adsorption min. | Pression partielle Torr [× 1,33·10² Pa] | Alimentation spécifique l/min g* |
|---|---|---|---|---|---|
| $H_2O$ | ≧ 22 | 20 | 30 | 20 | 0,8 |
| $NH_3$ | ≧ 10 | 20 | 30 | 620 | 0,85 |
| $CH_3OH$ | ≧ 15 | 20 | 30 | 150 | 1,0 |
| $CO_2$ | ≧ 8 | 20 | 30 | 150 | 1,0 |
| n-Hexane ($C_6H_{14}$) | ≦ 4 | 20 | 30 | 580 | 1,1 |

* de gaz à adsorber a été dilué avec de l'air porteur.

Les résultats sont en l de mélange gazeux par mn et par gr de zéolite et qu'ils ont un indice cinétique pour l'eau d'au moins 0,8.

2. Granulés de zéolite du type zéolite A combinés au silicate de magnésium caractérisés en ce qu'ils contiennent comme zéolite du type A une zéolite/potassium du type A, qu'ils possèdent les données suivantes d'adsorption:

| Molécule | % en poids | Temps. °C | Durée d'adsorption min. | Pression partielle Torr [× 1,33·10² Pa] | Alimentation spécifique l/min g* |
|---|---|---|---|---|---|
| $H_2O$ | ≧ 21 | 20 | 30 | 20 | 0,8 |
| $NH_3$ | ≧ 7 | 20 | 30 | 620 | 0,85 |
| $CH_3OH$ | ≦ 6 | 20 | 30 | 150 | 1,0 |
| $CO_2$ | ≦ 2 | 20 | 30 | 150 | 1,0 |
| n-Hexane | ≦ 3 | 20 | 30 | 580 | 1,1 |

* de gaz à adsorber a été dilué avec l'air porteur.

Résultats en l de mélange gazeux par mn et par gr de zéolite et qu'ils ont un index de cinétique d'au moins 0,7.

3. Granulés de zéolite du type zéolite A combinés au silicate de magnésium, caractérisés en ce qu'ils contiennent comme zéolite du type une zéolite/sodium, qu'ils possèdent les données d'adsorption suivantes:

| Molécule | % en poids | Temps. °C | Durée d'adsorption min. | Pression partielle Torr [× 1,33·10² Pa] | Alimentation spécifique l/min g* |
|---|---|---|---|---|---|
| $H_2O$ | ≧ 24 | 20 | 30 | 20 | 0,8 |
| $NH_3$ | ≧ 10 | 20 | 30 | 620 | 0,85 |
| $CH_3OH$ | ≧ 15 | 20 | 30 | 150 | 1,0 |
| $CO_2$ | ≧ 10 | 20 | 30 | 150 | 1,0 |
| n-Hexane | ≦ 4 | 20 | 30 | 580 | 1,1 |

* de gaz à adsorber a été dilué avec de l'air porteur.

Résultats en 1 de mélange gazeux par mn et par gr de zéolite et qu'ils ont un index cinétique pour l'eau d'au moins 0,8.

4. Granulés de zéolite du type zéolite A combinés au silicate de magnésium, caractérisés en ce qu'ils contiennent comme zéolite du type A une zéolite A/calcium, qu'ils possèdent les données d'adsorption suivantes:

| Molécule | % en poids | Temps. °C | Durée d'adsorption min. | Pression partielle Torr [× 1,33·10² Pa] | Alimentation spécifique l/min g* |
|---|---|---|---|---|---|
| $H_2O$ | ≧22 | 20 | 30 | 20 | 0,8 |
| $NH_3$ | ≧10 | 20 | 30 | 620 | 0,85 |

(Suite page suivante)

| Molécule | % en poids | Temps. °C | Durée d'adsorption min. | Pression partielle Torr [× 1,33·10² Pa] | Alimentation spécifique l/min g* |
|---|---|---|---|---|---|
| $CH_3OH$ | ≧ 15 | 20 | 30 | 150 | 1,0 |
| $CO_2$ | ≧ 14 | 20 | 30 | 150 | 1,0 |
| n-Hexane | ≦ 12 | 20 | 20 | 580 | 1,1 |

* de gaz à adsorber a été dilué avec de l'air porteur.

Résultats en l de mélange gazeux par mn et par gr de zéolite, et qu'ils ont un indice cinétique pour l'eau d'au moins 0,8.

5. Procédé d'obtention des granulés de zéolite combinés au silicate de magnésium selon la revendication 1, caractérisé en ce que l'on dispose la zéolite A pulvérulente dans un mélangeur, ajoute une solution de silicate de sodium, mélange aussi longtemps que l'on obtient un granulé de zéolite ayant une taille de grains d'au moins de 0,1 mm, que l'on calandre ultérieurement les granulés humides de zéolite en premier lieu à des températures allant de 20 à 39 °C à la suite de quoi on ajuste la teneur en gaz carbonique de l'air de séchage à moins de 200 ppm, qu'on sèche ensuite le cas échéant dans une deuxième étape de séchage à des températures allant de 40 à 120 °C, et le cas échéant dans une troisième étape de séchage à 121–200 °C dans des conditions habituellement semblables et que l'on active ensuite les granulés de zéolite ainsi obtenus à des températures au maximum de 600 °C, que l'on traite les granulés de zéolite ainsi obtenus avec une solution d'un sel de magnésium, que l'on lave, que l'on sèche à 40 à 200 °C, de préférence à 100 à 120 °C et le cas échéant ensuite on calcine à 300–600 °C de préférence de 400 à 450 °C.

6. Procédé d'obtention des granulés de zéolite combinés au silicate de magnésium selon la revendication 2, caractérisé en ce que l'on dispose la zéolite A pulvérulente dans un mélangeur, que l'on ajoute une solution de silicate de sodium, que l'on mélange aussi longtemps jusqu'à ce qu'on obtienne une taille de grains d'au moins 0,1 mm, que l'on roule ultérieurement le cas échéant les granulés de zéolite, que l'on sèche les granulés humides de zéolite en premier lieu à des températures allant de 20 à 39 °C, après quoi on ajuste la teneur en gaz carbonique de l'air de séchage à moins de 200 ppm, que l'on sèche ensuite le cas échéant dans une deuxième étape à des températures de 40 à 120 °C et le cas échéant dans une troisième étape de séchage à 121–200 °C dans des conditions habituellement semblables, et le cas échéant qu'on active ensuite les granulés de zéolite ainsi obtenus à des températures d'au maximum 600 °C et qu'on traite les granulés de zéolite ainsi obtenus avec une solution aqueuse d'un sel de magnésium, qu'on lave, qu'on traite ensuite avec une solution aqueuse d'un sel de potassium, qu'on lave, qu'on sèche à une température de 40 à 200 °C, de préférence de 100 à 120 °C, que l'on sèche et que l'on calcine le cas échéant ensuite à une température de 300 à 550 °C, de préférence de 350 à 450 °C.

7. Procédé d'obtention de granulés de zéolite combinés au silicate de magnésium selon la revendication 3, caractérisé en ce que l'on dispose la zéolite A pulvérulente dans un mélange, que l'on ajoute une solution de silicate de sodium, que l'on mélange aussi longtemps que l'on obtienne des granulés de zéolite ayant une taille de grains d'au moins 0,1 mm, que l'on roule éventuellement ultérieurement ces granulés de zéolite, que l'on sèche les granulés humides de zéolite en premier lieu à des températures allant de 20 à 39 °C, pour lequel on ajuste la teneur en gaz carbonique de l'air de séchage à moins de 200 ppm, que l'on sèche le cas échéant dans une deuxième étape de séchage à des températures de 40 à 120 °C et le cas échéant dans une troisième étape de séchage à 121–200 °C dans des conditions habituellement similaires et que l'on active le cas échéant ensuite les granulés de zéolite ainsi obtenus à des températures d'au maximum 600 °C, que l'on traite les granulés de zéolite ainsi obtenus avec une solution aqueuse d'un sel de magnésium, que l'on lave, que l'on sèche à une température de 40 à 200 °C, de préférence de 100 à 120 °C, et que l'on calcine le cas échéant ensuite à une température de 300 à 600 °C, de préférence de 400 à 500 °C.

8. Procédé d'obtention des granulés de zéolite combinés au silicate de magnésium selon la revendication 4, caractérisé en ce que l'on dispose une zéolite A pulvérulente dans un mélangeur, que l'on obtienne des granulés de zéolite ayant une taille de grains d'au moins 0,1 mm, que l'on roule ultérieurement le cas échéant ces granulés de zéolite, que l'on sèche les granulés humides de zéolite en premier lieu à des températures de 20 à 39 °C, pour lequel on ajuste la teneur en gaz carbonique de l'air de séchage à moins de 200 ppm, que l'on sèche ensuite le cas échéant dans une deuxième étape de séchage à des températures allant de 40 à 120 °C, et le cas échéant dans une troisième étape de séchage à 121–200 °C, dans des conditions habituellement semblables et que l'on active le cas échéant ensuite les granulés de zéolite ainsi obtenus à des températures au maximum de 600 °C, que l'on traite les granulés de zéolite ainsi obtenus avec une solution aqueuse d'un sel de magnésium, que l'on lave, que l'on traite ensuite avec une solution aqueuse d'un sel de calcium que l'on lave, que l'on sèche à une température de 40 à 200 °C, de préférence de 100 à 120 °C, et que l'on calcine le cas échéant à 300 à 650 °C, de préférence de 450 à 600 °C.

9. Utilisation des granulés de zéolite combinés au silicate de magnésium selon les revendications 1, 2, 3 et 4 comme agent d'adsorption dans des systèmes gazeux ou liquides.

10. Utilisation des granulés de zéolite combinés au silicate de magnésium selon la revendication 9 comme agent d'adsorption dans des filtres pour pipes et pour cigarettes.

11. Utilisation des granulés de zéolite combinés au silicate de magnésium selon la revendication 10 en vue du séchage de solvants organiques.